# EUROPÄISCHE PATENTSCHRIFT

(11) **EP 2 342 102 B1**
(45) Veröffentlichungstag und Bekanntmachung des Hinweises auf die Patenterteilung: **22.11.2017**
(21) Anmeldenummer: 09778758.4
(22) Anmeldetag: 29.09.2009
(51) Int. Cl.: B60R 21/264

(54) **GASGENERATOR, VERFAHREN ZU SEINER HERSTELLUNG SOWIE MODUL MIT GASGENERATOR**
GAS GENERATOR, METHOD FOR THE PRODUCTION THEREOF AND MODULE HAVING A GAS GENERATOR
GÉNÉRATEUR DE GAZ, SON PROCÉDÉ DE PRODUCTION, AINSI QUE MODULE COMPRENANT UN GÉNÉRATEUR DE GAZ

(30) Priorität: 30.09.2008 DE 102008049652; 30.09.2008 DE 102008049650
(43) Veröffentlichungstag der Anmeldung: 13.07.2011
(73) Patentinhaber: TRW Airbag Systems GmbH, 84544 Aschau am Inn (DE)
(72) Erfinder: BIERWIRTH, Sebastian, 83562 Rechtmehring (DE); HOFMANN, Achim, 84577 Tüssling (DE); NEUMAYER, Hans-Peter, 84539 Ampfing (DE); SPITZENBERGER, Dieter, 84559 Kraiburg (DE); FÜRSTENBERGER, Franz, 84574 Taufkirchen (DE); NUIDING, Hannes, 84453 Mühldorf am Inn (DE); LEIER, Dieter, 83527 Haag (DE); SCHÖNHUBER, Georg, 84565 Oberneukirchen (DE); FRIEDRICH, Jörg, 81379 München (DE)
(74) Vertreter: ZF TRW Patentabteilung
(86) Internationale Anmeldenummer: PCT/EP2009/006988
(87) Internationale Veröffentlichungsnummer: WO 2010/037516

(56) Entgegenhaltungen:
- EP-A1- 0 616 927
- EP-A1- 0 808 258
- EP-A1- 1 396 396
- EP-A1- 1 837 253
- EP-A2- 0 488 937
- EP-A2- 1 270 340
- WO-A1-2005/075050
- DE-U1- 29 822 459
- DE-U1-202005 016 885
- JP-A- 2 155 861
- JP-A- 11 211 605
- US-A- 5 131 679
- US-A- 5 492 365
- US-A- 5 558 366
- US-A1- 2008 022 880

## Beschreibung

Die Erfindung betrifft einen Gasgenerator nach dem Oberbegriff von Anspruch 1.

Gasgeneratoren für Schutzeinrichtungen in einem Fahrzeug treiben z.B. Teile (Aufstellen von Motorhauben, Straffen des Gurtes, Verschieben von Polstern oder dergleichen) an oder blasen Gassäcke auf.

Aus den Schriften US 2007/0273132 A1 und US 5,558,366 ist jeweils ein Gasgenerator der eingangs genannten Art bekannt.

Die Erfindung verbessert eine solche bekannte Konstruktion hinsichtlich mechanischer Stabilität und Belastbarkeit durch die kennzeichnenden Merkmale von Anspruch 1.

Wie bereits beschrieben, hat der Gasgenerator der Erfindung ein Außengehäuse, mit einer zentralen Achse, und einen in einen Sockel eingebetteten Anzünder, wobei das Außengehäuse oder ein mit dem Außengehäuse verbundenes Teil eine Einbuchtung aufweist, in die sich der Sockel erstreckt. Die die Einbuchtung bildende Wand ist abschnittsweise radial nach innen gewölbt und hat entfernt von der Mündung der Einbuchtung eine nach außen verlaufende Ausbauchung, die sich in radialer Richtung erstreckt, wobei die Wand der Einbuchtung im Bereich der Ausbauchung eine S-förmige Kurve bildet und die Wandstärke der Wand der Einbuchtung im Bereich der Ausbauchung unverändert gegenüber der Wandstärke außerhalb der Ausbauchung ist. Auf diese Weise ist eine Art Hinterschnitt gebildet, in dem sich das Material des Sockels radial weiter nach außen erstreckt als die Wand des Außengehäuses oder, bei einer nicht einstückigen Ausführung, das mit dem Außengehäuse verbundene Teil im Bereich der Mündung. So entsteht eine zusätzliche Sicherung des Sockels und des Anzünders.

Die Wölbung kann ringförmig umlaufen, vorzugsweise bezogen auf die zentrale Achse. Es ist aber auch möglich, nur an einzelnen Stellen am Umfang der Einbuchtung einzelne Ausbuchtungen vorzusehen.

Die die Einbuchtung bildende Wand hat vorzugsweise angrenzend an die Wölbung die gleiche Wandstärke wie in dem gewölbten Bereich, d.h. die Wand als Ganzes wird gebogen, und der Konturverlauf an der Innenseite folgt der auf der Außenseite.

In einem Axialschnitt gesehen kann dabei die Einbuchtung eine S-Form aufweisen, wobei der Mündungsabschnitt der die Einbuchtung bildenden Wand nach außen verläuft. Vorzugsweise sind keine scharfen Kanten oder Übergänge vorgesehen, sondern eine gleichmäßige Rundung der Innenwand der Einbuchtung. Auf diese Weise kann beim Umspritzen das den Sockel bildende Kunststoffmaterial die Ausbuchtungen leicht ausfüllen.

Die Erfindung schafft darüber hinaus einen Gasgenerator, insbesondere gemäß der zuvor und/ oder nachstehend beschriebenen Art, mit einem Außengehäuse, vorzugsweise mit einer zentralen Achse, und einem in einen Sockel eingebetteten, vorgefertigten Anzünder, wobei das Außengehäuse oder ein mit dem Außengehäuse verbundenes Teil eine Einbuchtung aufweist, in die sich der Sockel erstreckt, und eine die Einbuchtung bildende Wand einen Bodenabschnitt mit einer Öffnung aufweist, durch die sich der Sockel hindurch erstreckt, wobei der Bodenabschnitt auf seinen entgegengesetzten Außenseiten in dem Bereich, in dem der Sockel an ihm anliegt, zumindest einen Vorsprung und/oder eine Vertiefung aufweist. Diese Formgebung sorgt neben einer festen Verbindung auch für eine Verbesserung der Dichtigkeit gegenüber möglichen Feuchtepfaden von außen.

Zum Beispiel kann der Rand der Öffnung auf einer Außenseite einen konvex geformten Vorsprung aufweisen. "Außenseite" heißt dabei die zur Außenseite des Gasgenerators gerichtete Seite.

Der Vorsprung kann beispielsweise durch einen umlaufenden Wulst gebildet sein. Es ist möglich, dass an dieser Stelle die Wandstärke des Bodenabschnitts vergrößert ist.

Der Bodenabschnitt ist z.B. durch einen Teil oder Abschnitt eines Verschlusskörpers gebildet, der wiederum Teil des Außengehäuses des Gasgenerators ist. Es kann aber auch ein separater Teil des Gasgenerators hierzu vorgesehen sein.

Bevorzugt weist der Bodenabschnitt auf der dem Vorsprung entgegengesetzten Außenseite im Bereich des Vorsprungs eine insbesondere ringförmig umlaufende Vertiefung auf. Diese Vertiefung ist beispielsweise in das Innere des Gasgenerators hinein gerichtet.

Vorteilhaft sind sowohl der Vorsprung als auch die optionale Vertiefung vom Kunststoffmaterial des Sockels umgeben bzw. ausgefüllt.

Dies ist besonders vorteilhaft, wenn der Sockel durch zumindest abschnittsweises Umspritzen der die Einbuchtung bildenden Wand gebildet ist, da auf diese Weise eine dichte Verbindung geschaffen wird.

Weitere vorteilhafte Ausführungsformen der Erfindung sind Gegenstand der Unteransprüche.

Weitere Merkmale und Vorteile der Erfindung ergeben sich aus der nachfolgenden Beschreibung mehrerer bevorzugter Ausführungsformen in Verbindung mit den beigefügten Zeichnungen. In diesen zeigen:
- Figur 1 eine Schnittansicht eines erfindungsgemäßen Gasgenerators;
- Figur 2 eine Detailansicht aus Figur 1;
- Figur 3 eine weitere Detailansicht aus Figur 1;
- Figur 4a eine schematische Draufsicht auf den Flansch eines erfindungsgemäßen Gasgenerators;
- Figur 4b eine Variante des Flansches in Figur 4a;
- Figuren 5 und 6 jeweils eine schematische perspektivische Darstellung eines Gassackhalteblechs eines erfindungsgemäßen Moduls, insbesondere Gassackmoduls, mit einem eingebauten erfindungsgemäßen Gasgenerator;
- Figur 7 eine schematische Querschnittsansicht eines erfindungsgemäßen Gassackmoduls mit einem erfindungsgemäßen Gasgenerator;
- Figur 8 eine schematische perspektivische Darstellung eines Diffusors eines erfindungsgemäßen Gasgenerators; und
- Figur 9 eine schematische Schnittansicht des Diffusors in Figur 8.
- Figur 10 eine Schnittansicht eines Gasgenerators;
- Figur 11 ein vergrößertes Detail aus Figur 10, das die Verbindung eines ersten mit einem zweiten Bauteil zeigt; und
- Figur 12 vergrößert den Übergang vom ersten zum zweiten Bauteil.

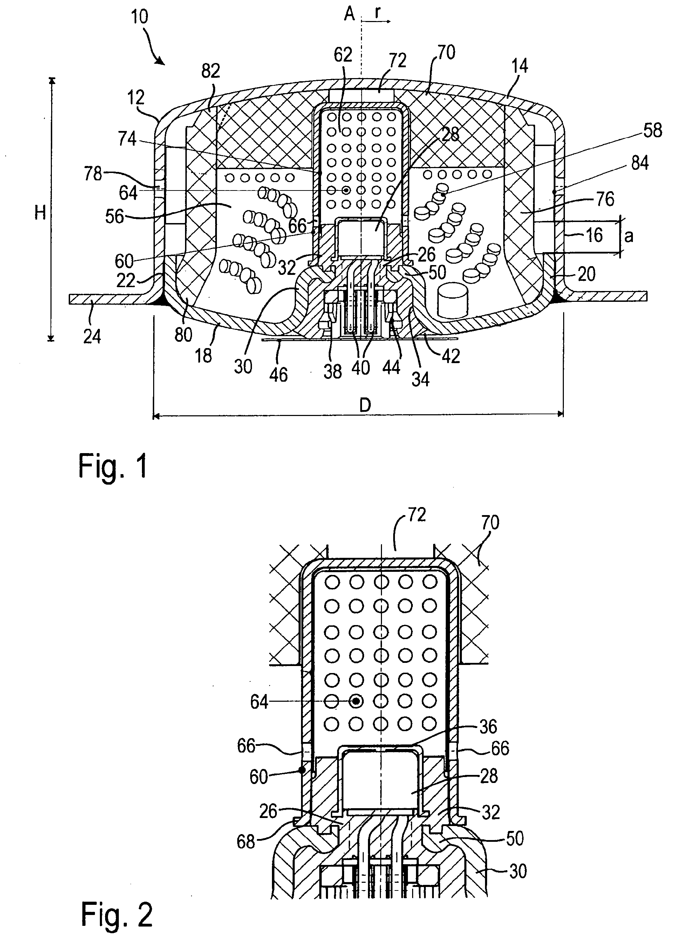

Figur 1 zeigt einen Gasgenerator 10 mit einem Außengehäuse 12, das hier aus einem topfförmigen Diffusor 14 mit einer im wesentlichen zylindrischen Umfangswand 16 und einem Verschlusskörper 18, der hier auch den Boden des Gasgenerators 10 bildet, zusammengesetzt ist.

Der Verschlusskörper 18 besitzt einen umlaufenden, hochgezogenen Rand 20, der an der Innenseite der Umfangswand 16 des Diffusors 14 anliegt und mittels einer Schweißnaht 22 mit dieser fest verbunden ist. Die Schweißnaht 22 erstreckt sich vorzugsweise über die gesamte Anlagefläche zwischen Verschlussschale 18 und Diffusor 14 und bis zur Außenseite des Gasgenerators 10, wo sie eine zwischen Verschlusskörper 18 und Diffusor 14 bestehende Nut ausfüllt. Zur Verbindung von Diffusor 14 und Verschlusskörper 18 kann beispielsweise ein Laserschweißverfahren eingesetzt werden.

Am verschlusskörperseitigen Ende ist die Umfangswand 16 des Diffusors 14 nach außen gebogen, sodass ein horizontal um dem Gasgenerator 10 umlaufender, planer Flansch 24 gebildet ist.

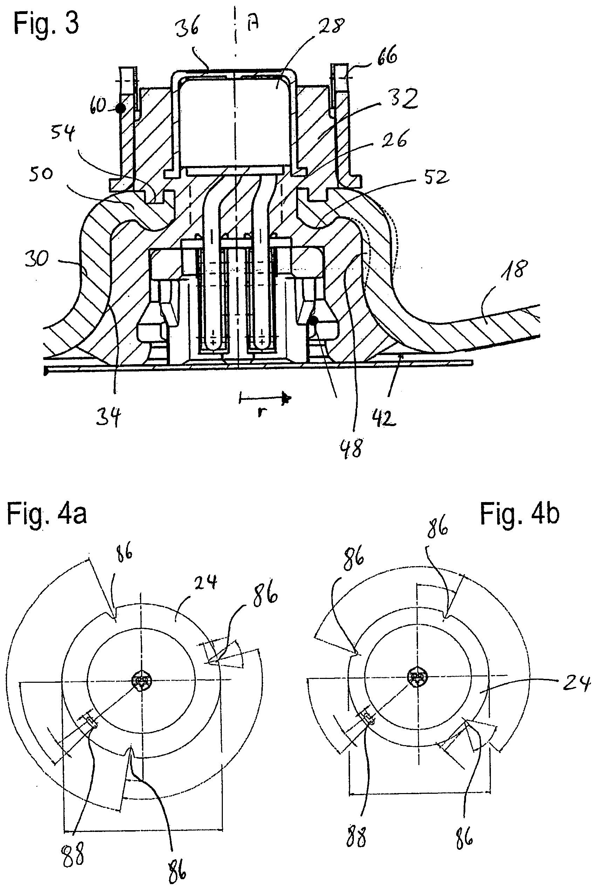

Der Verschlusskörper 18 hat eine zentrale Öffnung 26, die zur Aufnahme eines vorgefertigten Anzünders 28 dient. Zur zentralen Öffnung 26 hin hat der Verschlusskörper 18 eine Einbuchtung 34 mit einem ringförmigen Abschnitt 30. Die Einbuchtung 34 ist eine Art Einstülpung des Außengehäuses. Dieser Bereich des Gasgenerators 10 ist im Detail in den Figuren 2 und 3 dargestellt.

Der Anzünder 28 ist von einem Sockel 32 umgeben, der den Anzünder 28 auch mit dem Verschlusskörper 18 und insbesondere mit dem Rand der Öffnung 26 und dem ringförmigen Abschnitt 30 verbindet.

Der Sockel 32 besteht aus einem Kunststoffmaterial und wird spritzgegossen, nachdem der Anzünder 28 in die Öffnung 26 eingebracht wurde. Beim Spritzgießen umschließt das Kunststoffmaterial sowohl den größten Teil des Anzünders 28 als auch den Rand der Öffnung 26 und füllt auch die durch den ringförmigen Abschnitt 30 gebildete Einbuchtung 34 auf der Außenseite des Gasgenerators 10 mit Ausnahme einer nach außen gerichteten Zündersteckeraufname 38, in die Kontaktstifte für eine elektrische Kontaktierung des Anzünders 28 hineinragen, vollständig aus. Der Anzünder 38 wird beim Umspritzen gleichzeitig in den Sockel 32 eingebettet. Durch den Sockel 32 und den Anzünder 28 ist die Öffnung 26 vollständig verschlossen und die Einbuchtung 34 wird vom Sockel sozusagen ausgekleidet.

In diesem Fall ist der Anzünder 28 so weit vom Sockel 32 umschlossen, dass lediglich seine Oberseite sowie ein kurzer oberer Abschnitt einer Anzünderkappe 36 freigelassen sind.

Der Anzünder 28 ist vorzugsweise ein separates, vorgefertigtes Bauteil. Die Anzünderkappe 36 ist entweder Teil des vorgefertigten Anzünders 28 oder ein separates, auf den Anzünder 28 aufgesetztes Bauteil.

Die Anzünderkappe 36 besteht in diesem Beispiel aus einem Kunststoff, und zwar aus einem gleichartigen Kunststoff wie der Sockel 32, vorzugsweise aus dem identischen Kunststoff. Vorzugsweise wird ein Standardmaterial mit einem Glasfaseranteil eingesetzt, wobei der Glasfaseranteil zum Beispiel 30 Gew.% betragen kann. Die Verwendung eines gleichartigen oder gleichen Kunststoffes führt dazu, dass beim Spritzgießen die Anzünderkappe 36 ganz oder teilweise mit dem Sockel 32 verschmilzt, und sich so eine dichte und unlösbare Verbindung bildet.

Die Einbuchtung 34 kann natürlich auch an einem separaten Teil des Gasgenerators 10 ausgebildet sein, der mit dem Außengehäuse 12, insbesondere mit dem Verschlusskörper 18 verbunden ist.

An der Außenseite der Einbuchtung 34 ist zwischen dem Verschlusskörper 18 und dem Sockel 32 eine umlaufende Vertiefung gebildet, die mit einem Dichtmittel 42, hier in Form eines Acrylatklebers ausgefüllt ist.

Das Dichtmittel 42 ist so ausgewählt, dass es sowohl am Metall der Verschlussschale 18 als auch am Kunststoff des Sockels 32 haftet. Das Dichtmittel 42 wird nach dem Spritzgießen des Sockels 32 von außen aufgebracht und liegt vollständig außerhalb des Außengehäuses 12 des Gasgenerators 10 und komplett in der umlaufenden Vertiefung.

Das Dichtmittel 42 wird in flüssiger oder pastöser Form aufgebracht und mit UV-Licht ausgehärtet. Es weist eine hohe Flexibilität auch bei tiefen Temperaturen von bis zu -40°C auf. Es hat eine geringe Viskosität, so dass es sich leicht verarbeiten lässt, gute Benetzungseigenschaften sowohl für Metall- als auch für Kunststoffoberflächen und haftet sowohl auf Metall als auch auf Kunststoff.

Das Dichtmittel besitzt wenigstens eine der folgenden Eigenschaften:

| | |
|---|---|
| Bruchfestigkeit nach ISO 527 [MPa] | 2-4, insbes. 3; |
| Reiß- oder Bruchdehnung nach ISO 527 [%] | 200-400, insbes. 300 ± 40; |
| Viskosität bei 23°C nach Brookfield Sp/U und 3/100 [mPas] | 400-800, insbes. 600 ± 80; |
| Glasumwandlungstemperatur (Rheometer) [°C] | 10-30, insbes. 20 ± 4; |
| Therm. Expansionskoeffizient bei 30-140°C [ppm/K] | 150-350, insbes. 260±30; |
| Dichte bei 23 °C [g/cm³] | 0,6-1,5, insbes. 1,0 ± 0,1; |
| Wasserabsorption nach ISO 62, 24 h bei 23 °C [%] | 0,9-1,7, insbes. 1,3 ± 0,2. |

Dem Dichtmittel 42 ist ein Farbstoff, vorzugsweise ein Fluoreszenzfarbstoff, beigemischt. Dies erlaubt eine einfache Kontrolle, ob die Dichtraupe vollständig aufgebracht wurde und die Vertiefung komplett mit dem Dichtmittel 42 gefüllt ist. Bei einer Bestrahlung mit UV-Licht ist aufgrund des fluoreszierenden Farbstoffs einfach zu erkennen, an welcher Stelle sich Dichtmittel 42 befindet. Wird ein nicht fluoreszierender Farbstoff verwendet, so ist für diesen eine andere Farbe als für den Sockel 32 beziehungsweise den Verschlusskörper 18 gewählt, so dass an Hand der Farbe zu erkennen ist, ob die Dichtraupe vollständig und umlaufend ist.

Die Kontrolle kann unter Einsatz einer Kamera vorgenommen werden.

Vor seiner Montage in ein Gassackmodul sind die Kontaktstifte 40 des Gasgenerators 10 über eine Kurzschlussbrücke 44 verbunden. Die Zündersteckeraufnahme 38, der Sockel 32 und das Dichtmittel 42 sind in diesem Zustand durch eine Laminatfolie 46 abgedeckt und so vor Umwelteinflüssen geschützt.

Die die Einbuchtung 34 bildende Wand ist abschnittsweise in radialer Richtung r gewölbt ausgebildet (siehe Fig. 3), und zwar so, dass eine oder mehrere Ausbauchungen 48, die sich in radialer Richtung von der Einbuchtung 34 weg erstrecken, gebildet sind. Der Gasgenerator 10 weist eine zentrale Achse A auf (siehe Figur 1). Bezogen auf diese zentrale Achse A verläuft die Wölbung, die die Ausbauchung 48 bildet, in diesem Beispiel ringförmig um die Einbuchtung 34.

Es ist auch möglich, die Ausbauchung 48 in Umfangsrichtung nicht durchgängig auszubilden und nur eine oder mehrere, separate Ausbauchungen 48 entlang des Umfangs der Einbuchtung 34 vorzusehen. Der Verlauf der Wand ist in Figur 3 mit gestrichelten Linien gezeigt. Die Wandstärke der Wand der Einbuchtung 34 ist hier unverändert gegenüber der Wandstärke außerhalb der Ausbauchung 48.

In dem in Figur 3 gezeigten Schnitt bildet die Wand der Einbuchtung 34 im Bereich einer Ausbauchung 48 eine S-förmige Kurve, wobei der Mündungsabschnitt (unteres axiales Ende) der die Einbuchtung 34 bildenden Wand nach außen verläuft.

Die Einbuchtung 34 weist neben dem ringförmigen Abschnitt 30 einen Bodenabschnitt 50 auf, der sich in Richtung zum Inneren des Gasgenerators 10 an den ringförmigen Abschnitt 30 anschließt. Der Bodenabschnitt 50 bildet auch den Rand der Öffnung 26. Am Bodenabschnitt 50 am Rand der Öffnung 26 ist zur Außenseite des Gasgenerators hin ein ringförmig umlaufender Vorsprung 52 ausgebildet (nur in Figur 3 mit Bezugszeichen versehen). Der Vorsprung 52 bildet eine konvexe Form und ist ohne scharfe Kanten geformt. Auf der gegenüberliegenden Seite (Innenseite) weist der Bodenabschnitt eine vorzugsweise im Profil rechteckige Vertiefung, die ebenfalls umlaufend um den Rand der Öffnung 26 verläuft und deren Öffnung ins Innere des Gasgenerators 10 gerichtet ist.

Sowohl die Nut 54 als auch der Vorsprung 52 werden beim Spritzgießen des Sockels 32 vom flüssigen Kunststoff umschlossen, so dass sich eine feste und dichte Verbindung zum Sockel 32 ausbildet, die auch Temperaturschwankungen standhält sowie während und nach dem Erstarren des Kunststoffs eine zusätzliche Halterung darstellt. Auch die Vertiefung 54 ist nur in Figur 3 mit Bezugszeichen gezeigt.

Im Inneren des Außengehäuses 12 ist eine ringförmige, also im Wesentlichen toroidale Brennkammer 56 gebildet (siehe Fig.1), die mit einem bekannten pyrotechnischen gaserzeugenden Mittel 58, hier angedeutet durch einige Tabletten, befüllt ist.

Zur Mittelachse A des Gasgenerators 10 hin wird die Brennkammer 56 durch eine Kappe 60 begrenzt, die den Anzünder 28 und den im Inneren des Gasgenerators 10 liegenden Abschnitt des Sockels 32 sowie zusätzlich einen Freiraum in Form einer Zwischenkammer 62 umschließt. Die Zwischenkammer 62 ist mit einer Verstärkerladung aus bekanntem pyrotechnischem, gaserzeugenden Material 64 gefüllt.

Die Kappe 60 (siehe Fig. 2) weist mehrere Überströmöffnungen 66 auf, die eine Verbindung zwischen der Zwischenkammer 62 und der Brennkammer 56 schaffen. In diesem Beispiel besteht die Kappe 60 aus Stahl. Sie ist am oberen Ende geschlossen und am unteren Ende offen und hat eine im Wesentlichen zylindrische Wand, in der die Überströmöffnungen 66 angeordnet sind. Die Kappe 60 ist am offenen Ende nach außen umgebogen, so dass ein kurzer Flansch 68 entsteht (siehe Figur 2). Nach Einbringen der Verstärkerladung 64 wird die Kappe 60 lediglich auf den Sockel 32 aufgeschoben und eventuell mit diesem verpresst oder unter Bildung eines Pressitzes aufgeschoben. Ein Festschweißen ist nicht vorgesehen. Dies führt dazu, dass sich bei der Aktivierung des Gasgenerators 10 und Zünden des Anzünders 28 die Kappe 60 sich in Richtung nach oben, also vom Anzünder 28 weg, verschieben kann. Hierdurch bewegen sich im Verlauf des Abbrandvorgangs auch die Überströmöffnungen 66 nach oben, d.h. relativ zum Treibsatz. Dadurch kommen weitere Bereiche des Treibstoffbetts in der Brennkammer 56 mit den aus der Zwischenkammer 62 ausströmenden heißen Gasen in Kontakt und werden gezündet.

Der in Figur 1 obere Bereich der Brennkammer 56, also auf der dem Anzünder 28 gegenüberliegenden Seite des Außengehäuses 12, ist mit einem elastischen Bauteil 70, hier einem Füllkörper oder Volumenausgleichselement versehen, der an der Oberseite des Diffusors 14 anliegt. Das elastische Bauteil 70 ist hier aus einem Maschengestrick aus Draht gebildet und ist komprimierbar, wenn sich die Kappe 60 bewegt. Ein weiterer Bewegungsspielraum für die Kappe 60 wird aus der Ausbauchung des Gasgenerators 10 während der Gasentwicklung gewonnen, bei der sich die Oberseite des Diffusors 14 leicht anhebt.

Das elastische Bauteil 70 hat eine zentrale Ausnehmung 72, in die die Kappe bis zu einem Absatz hineinragt und deren oberer Endabschnitt etwas kleiner ist als der Durchmesser der Kappe 60, um der Bewegung der Kappe 60 einen definierten Verschiebewiderstand entgegenzusetzen.

In diesem Fall bildet die Kappe 60 die einzige Trennwand zwischen der Zwischenkammer 62 und der Brennkammer 56. Es ist möglich, dass die Kappe 60 innenseitig mit einer Schutzfolie 74 ausgekleidet ist, die vor der Aktivierung des Gasgenerators 10 die Überströmöffnungen 66 verschließt, wobei die Schutzfolie 74 bei der Zündung des Anzünders 28 zerstört wird.

Im Zustand vor der Aktivierung, der in Figur 1 gezeigt ist, liegen die Überströmöffnungen 66 direkt an der Oberkante des Sockels 32, so dass sie einen möglichst großen Verschiebeweg in Richtung der zentralen Achse A haben.

Ein Filter 76 ist in der Brennkammer 56 angeordnet, der hier ringförmig, im wesentlichen zylindrisch ausgebildet ist und parallel zur Umfangswand 16 des Diffusors 14 mit einem geringen radialen Abstand zu dieser verläuft.

Der Filter 76 erstreckt sich über die gesamte Höhe des Gasgenerators 10 und reicht hier vom Verschlusskörper 18 bis zur Stirnseite des Diffusors 14. Der Filter 76 ist aus einem Drahtgestrick oder Drahtgewirk mit unterschiedlich dicken Drähten gebildet.

In der Umfangswand 16 des Diffusors 14 sind mehrere, in diesem Beispiel zwölf, Ausströmöffnungen 78 ausgebildet, die gleichmäßig über den Umfang des Diffusors 14 verteilt und auf einer axialen Höhe angeordnet sind. Der Filter 76 trennt die Ausströmöffnungen 78 von der Brennkammer 56, so dass der Filter 76 stromaufwärts der Ausströmöffnungen 78 liegt.

Der Filter 76 ist unter axialer Vorspannung in das Außengehäuse 12 eingepresst.

Der Filter 76 weist zwei axiale Enden 80, 82 auf, von denen wenigstens ein Ende nach außen abgewinkelt ist. In diesem Fall ist der abgewinkelte Bereich das untere axiale Ende 80 und die Abwinkelung verläuft geradlinig. Der Filter 76 hat im abgewinkelten Bereich die gleiche Dicke, die er auch in einem mittleren Bereich hat, der an den abgewinkelten Bereich angrenzt.

Im gezeigten Beispiel verläuft der Filter 76 im axialen Schnitt gesehen S-förmig. Auch am oberen axiale Ende 82 ist nämlich eine leichte Abwinkelung vorgesehen, die sich jedoch zur Mitte des Gasgenerators 10 hin erstreckt (in Figur 1 auf der linken Hälfte mit gestrichelten Linie angedeutet).

Beim Filter 76liegt die radial Innerste Anlagestelle des nach außen abgewinkelten unteren axialen Endes 80 radial weiter außen als die radial äußerste Anlagestelle des nach innen abgewinkelten axialen Endes 82, so dass die stirnseitigen Anlageflächen seitlich vollständig versetzt sind.

Der abgewinkelte Bereich am unteren axiale Ende 80 liegt in einer durch das Gehäuse des Gasgenerators 10 gebildete Ecke an. In diesem Fall ist das Gehäuseteil durch den Verschlusskörper 18 gebildet, und das untere axiale Ende 80 des Filters 76 liegt am Übergang von einer Bodenplatte des Verschlusskörpers 18 zum hochgebogenen Rand 20 desselben an.

Am oberen axialen Ende 82 verjüngt sich der Filter 76, wie dies insbesondere auf der rechten Seite der Figur 1 zu erkennen ist. An diesem Ende weist der Filter 76 volumenbezogen eine größere Länge dünner Drähte auf als im angrenzenden Bereich und vorzugsweise als im restlichen Filter, was den verjüngten Bereich sehr flexibel macht.

Diese Formgebung erlaubt es, das Material beim axialen Einpressen in den Gasgenerator so zu verformen, dass kein Bypass für eventuell beim Abbrand des pyrotechnischen Materials 58 entstehende Partikel entsteht.

Das pyrotechnische Material 58 in der Brennkammer 56 ist auf allen Seiten von Metall umgeben, d.h., die aus mehreren Teilen zusammengesetzte Brennkammerwand besteht durchgehend aus demselben Material. Die Brennkammer 56 wird durch den elastischen Füllkörper 70, den Filter 76, die Kappe 60 sowie den Verschlusskörper 80 umschlossen. Vorzugsweise bestehen, wie gesagt, alle diese Bauteile aus demselben Metall, bevorzugt aus dem gleichen Stahl.

Die Ausströmöffnungen 78 sind vor der Aktivierung des Gasgenerators 10 durch eine Verdämmung 84 in Form einer Verdämmfolie verschlossen. Die Verdämmung 84 ist umlaufend an der Innenseite der Umfangswand 16 des Diffusors 14 auf Höhe der Ausströmöffnungen 78 angebracht und überdeckt sämtliche Ausströmöffnungen 78. Die Höhe der Verdämmung 84 beträgt hier etwa das vierfache des Durchmessers der Ausströmöffnungen 78.

Das untere Ende der Verdämmung 84, also das dem Verschlusskörper 18 zugewandten Ende, ist mit Abstand zur Schweißnaht 22, die den Diffusor 14 mit dem Verschlusskörper 18 verbindet, angeordnet. Der Abstand a zur Schweißnaht 22, oder in diesem Fall gleichbedeutend zum Ende des oberen Rand 20 des Verschlusskörpers 18, beträgt im gezeigten Fall etwa 5,5 mm und liegt vorzugsweise zwischen 3 und 7 mm (siehe Fig. 1). Dieser Abstand ist ausreichend, um einen unerwünschten Wärmeübertrag beim Schweißen auf die Verdämmung 84 zu verhindern.

Das Außengehäuse 12 des Gasgenerators 10 weist eine relativ dünne Wandstärke auf, die bei dem hier gezeigten Beispiel an keiner Stelle 2 mm überschreitet. Insbesondere beträgt die Wandstärke des Diffusors 1,5 mm und die des Verschlusskörpers 1,9 mm. Diese Wandstärken sind ausreichend, um einem Brennkammerdruck bei der Aktivierung des Gasgenerators 10 von 300 bar standzuhalten.

Der Diffusor 14 und der Verschlusskörper 18 sind nur über die Schweißnaht 22 miteinander verbunden, so dass diese Schweißnaht 22 die einzige festigkeitbestimmende Verbindung zwischen den Bauteilen des Außengehäuses 12 bildet. Ein Zuganker ist vorzugsweise nicht vorgesehen.

Das Verhältnis von maximalem Brennkammerdruck zur Wandstärke liegt hier vorzugsweise zwischen 150 und 220 bar/mm.

Das Verhältnis der gesamten Ausströmfläche des Gasgenerators 10, also der Summe der Flächen sämtlicher Ausströmöffnungen 78, zur Wandstärke ist hier größer als 30, insbesondere größer als 34 mm.

Das Verhältnis des Durchmessers D des Diffusors, gemessen am Durchmesser der Umfangswand 16, zur kleinsten Wandstärke des Außengehäuses ist vorzugsweise kleiner als 50, und liegt vorzugsweise zwischen 35 und 45. Der Flansch 24 wird bei der Durchmesserbestimmung nicht berücksichtigt.

Der Gasgenerator 10 hat im wesentlichen die Form eines flachen Zylinders, wobei das Verhältnis Durchmesser D zu größter axialer Höhe H etwa 1,8 ± 0,2, vorzugsweise 1,8 ± 0,1 beträgt.

Der Flansch 24 am Außenumfang des Diffusors 14 ist plan, aber unsymmetrisch gestaltet (siehe Fign. 4a und b). Diese Gestaltung bietet eine Positionierungshilfe beim Einbau des Gasgenerators 10 in ein Modul, beispielsweise ein Gassackmodul, indem die Einbaulage eindeutig vorgegeben wird.

Im vorliegenden Beispiel sind als Einbaupositioniermittel 86 über den Umfang des Flansches 24 drei Kerben verteilt, und zwar in unterschiedlichen Winkelabständen. Die Winkel zwischen den Kerben betragen beispielsweise 115 und 148°, oder in einem anderen Beispiel 93 und 109°.

Als zusätzliches oder alternatives Einbaupositioniermittel ist eine Öffnung 88 in Form eines Langlochs im Flansch 84 ausgebildet. Diese Öffnung 88 ist die einzige Öffnung, die im Flansch 84 vorgesehen ist.

Es können natürlich auch mehr oder weniger Kerben 86 oder Vorsprünge an Stelle der Kerben oder andere geeignete Einbaupositioniermittel 86 vorgesehen sein.

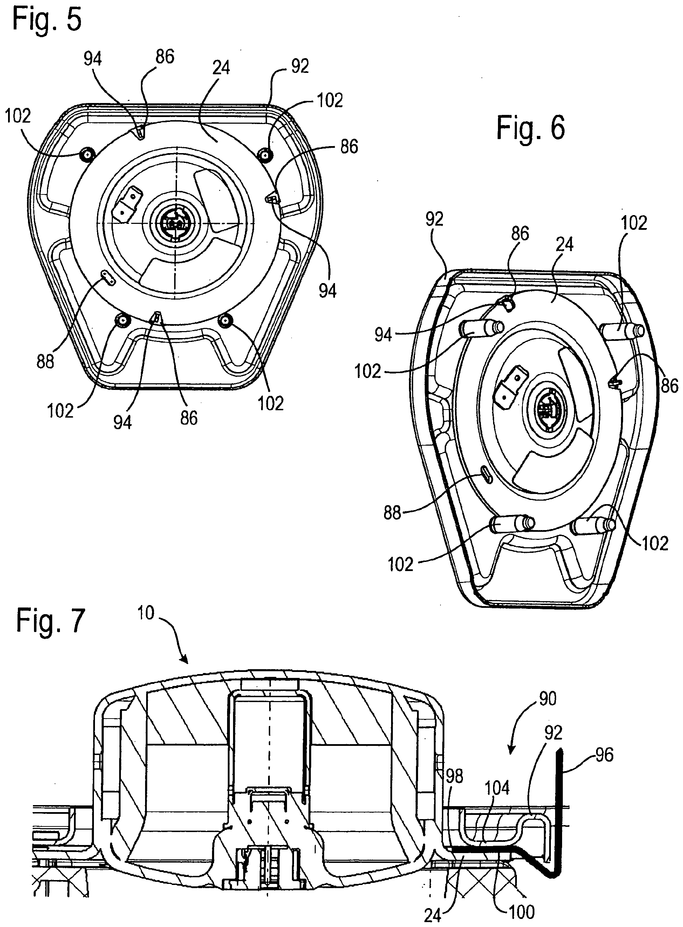

Beim Einbau des Gasgenerators 10 in ein Modul, zum Beispiel ein in Figur 7 gezeigtes Gassackmodul 90, wird der Gasgenerator 10 durch ein Klemm- oder Halteelement 92 befestigt (siehe auch Figuren 5 bis 7). Das Halteelement 92 weist eine zentrale Öffnung auf, durch die sich der Gasgenerator 10 teilweise hindurch erstreckt, so dass das Halteelement 92 gegen den Flansch 24 drückt. Das Halteelement 92 weist entsprechende Einbaupositioniermittel 94 auf, die komplementär zu den Einbaupositioniermitteln 86 des Flansches 24 des Gasgenerators 10 sind. In diesem Fall sind die Einbaupositioniermittel 94 durch einstückig angeformte Vorsprünge im Halteelement 92 gebildet, zum Beispiel in Form von ausgeschnittenen und aufgebogenen Blechabschnitten. Die Vorsprünge greifen in die Kerben ein und geben so die Einbaulage des Gasgenerators 10 eindeutig vor.

Die Öffnung 88 im Flansch 24 dient zur Festlegung der Einbaulage eines Gassacks 96 (angedeutet in Figur 7), der mit dem Öffnungsrand 100 seiner Einblasöffnung 98 zwischen dem Flansch 24 und dem Halteelement 92 geklemmt ist.

Das Langloch 88 ist darüber hinaus auch bei der Gasgeneratorfertigung verwendbar. Insbesondere kann bei verschiedenen Fertigungsschritten durch einen Stift im Werkzeugträger, der mit dem Langloch in Eingriff bringbar ist, die richtige Positionierung des Diffusors (Flansches) zu anderen Gasgeneratorbauteilen sicher gestellt werden, z.B. zur Orientierung bei den Anzünderpins.

Der Gassack 96 weist am Öffnungsrand 100 ebenfalls eine Öffnung auf (nicht gezeigt), die in Deckung mit der Öffnung 88 im Flansch gebracht wird, um den Gassack 96 richtig zu positionieren. Die Öffnung 88 dient nicht als Durchschrauböffnung und ist die einzige Öffnung am Öffnungsrand 100 des Gassacks 96. Das bedeutet, die Klemmung des Gassacks 96 zwischen Flansch 24 und Halteelement 92 erfolgt durch Befestigungsmittel, üblicherweise Schraubbolzen, die außerhalb des Flansches 24 liegen. Damit wird die Flanschfläche optimiert.

Zur Befestigung des Gassackmoduls 90 weist das Halteelement 92 Befestigungsbolzen 102 auf, im gezeigten Beispiel vier an der Zahl, über die das Gassackmodul 90 mit einem Fahrzeug (nicht gezeigt) verbunden werden kann. Die Befestigungsbolzen 102 liegen am Außenumfang des Flansches 24 an, jedoch abseits des Bereichs der Einbaupositioniermittel 86.

Der Flansch 24 ist umlaufend und plan ausgebildet.

Er bildet eine ringförmige Klemmfläche für den Gassack 96, wobei die Breite B des Flansches (der Übergangsradius zwischen dem planen Flanschabschnitt und der Umfangswand des Diffusors 14 zwischen 5 und 12%, vorzugsweise zwischen 8 und 11 % des maximalen Durchmessers D des Außengehäuses 12 beträgt.

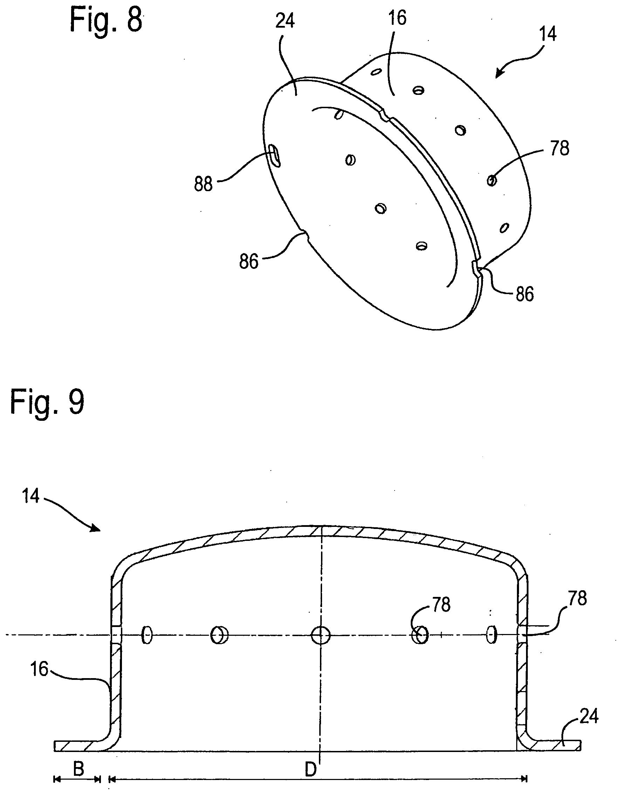

Die Breite B der Klemmfläche in radialer Richtung r beträgt zwischen 5 und 8,5, vorzugsweise zwischen 5,5 und 7,5 mm (siehe Fig. 9)

Am Halteelement 92 ist gegenüber der Klemmfläche am Flansch 24 ein Klemmabschnitt 104 definiert (siehe Fig. 7), der zusammen mit der Klemmfläche am Flansch 24 eine Haltekraft für den Gassack 96 erzeugt. Die Klemmfläche und der Klemmabschnitt 104 sind so ausgebildet, dass die durch den maximalen Innendruck im Gassacks 96 auf den Öffnungsrand 100 wirkenden Kräfte um 20 bis 50% geringer sind als die zwischen Klemmfläche und Klemmelement 104 erzeugte Klemmkraft. Durch diese sehr einfache Maßnahme läßt sich die Breite B des Flansches 24 erheblich reduzieren, sozusagen auf die minimale Flanschbreite.

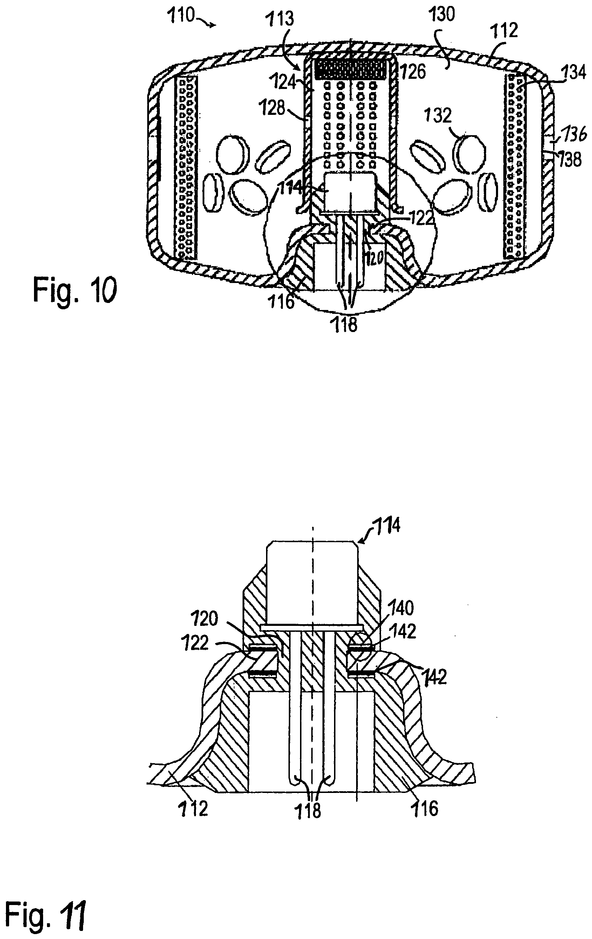

Figur 10 zeigt eine besondere Ausführungsform eines Gasgenerators 110, der ein erstes Bauteil 112, hier aus Metall, in Form eines Gasgeneratorgehäuses aufweist, in dem mittig eine Zündervorrichtung 113 angeordnet ist. Diese umfaßt einen Anzünder, der ein zweites Bauteil 114 darstellt, das über einen gespritzten Kunststoffsockel 116 mit dem ersten Bauteil 112 verbunden ist, indem beide Bauteile wenigstens teilweise gemeinsam umspritzt sind. Der Anzünder ist hier ein vorgefertigtes, durch eine metallische Außenhülle abgeschlossenes Bauteil und hat mehrere zum Teil in den Kunststoffsockel 116 eingebettete Anschlußleitungen 118, die durch eine Öffnung 120 im ersten Bauteil 112 (dem Gasgeneratorgehäuse) aus letzterem herausragen. Die Öffnung 120 dient gleichzeitig zur Aufnahme und Befestigung des zweiten Bauteils 114 (des Anzünders), wobei insbesondere der den Rand 122 der Öffnung 120 bildende Abschnitt des ersten Bauteils 112 beim Spritzen in den Kunststoffsockel 116 eingebettet wird.

Das in der Figur 10 obere Ende des Anzünders grenzt an eine mit einer Verstärkerladung gefüllte Verstärkerkammer 124 an. Bei der gezeigten Ausgestaltung ist eine die Verstärkerkammer 124 begrenzende Hülse 126, die mehrere Überströmöffnungen 128 hat, auf den Anzünder bzw. den Kunststoffsockel 116 aufgesetzt. Die Verstärkerkammer 124 ist von einer Brennkammer 130 umgeben, die mit einem schematisch gezeigten Treibstoff 132 in Tablettenform gefüllt ist und außenseitig an einen Filter 134 angrenzt. Das Gasgeneratorgehäuse weist an seiner Umfangswand Ausströmöffnungen 136 auf, die im Einbauzustand durch eine Verdämmfolie 138 vor Feuchteeintritt geschützt sind. Bei Aktivierung des Gasgenerators 110 wird in bekannter Weise ein Gas erzeugt, welches durch die Ausströmöffnungen 136 nach außen gelangt und z.B. dazu dient, einen Gassack eines Fahrzeuginsassen-Rückhaltesystems zu befüllen.

In dem nahe der Öffnung 120 bzw. das Randes 122 gelegenen Kontaktbereich 140 zwischen dem Kunststoffsockel 116 und dem ersten Bauteil 112 ist letzteres mit einer Klebefolie 142 versehen, die bereits vor dem Spritzen des Kunststoffsockels 116 aufgebracht wurde. Die Klebefolie 142 bedeckt nur einen Abschnitt des umspritzten Bereichs des ersten Bauteils 112. Die Klebefolie 142 läuft aber am Rand 122 geschlossen um.

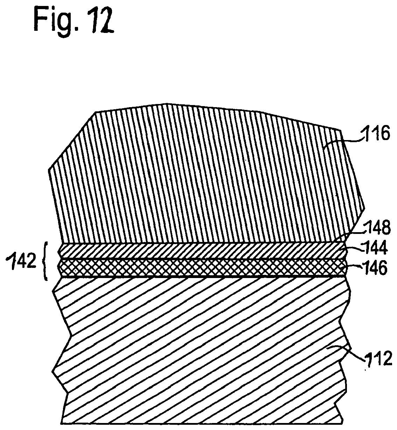

Die Klebefolie 142 ist ein vorab hergestelltes Bauteil und besteht aus einer Kunststoffolie 144 und einer darauf direkt und gleichmäßig aufgebrachten Klebstoffschicht 146 (siehe Fig. 12).

Als Material für die Kunststoffolie 144 wird in diesem Beispiel das gleiche Material verwendet wie für den Kunststoffsockel 116. Es ist aber auch möglich, ein anders Material einzusetzen, das geeignet ist, eine feste Verbindung mit dem Material des Kunststoffsockels 116 einzugehen. Dabei kann es sich etwa um ein thermoplastisches Elastomer handeln.

Die Klebefolie 142 dient als Haftbrücke zwischen dem Kunststoffsockel 116 und dem ersten Bauteil 112.

Abweichend von der gezeigten Ausgestaltung kann sich die Fläche der Klebefolie 142 natürlich auch über den gesamten umspritzten Abschnitt des Bauteils 112 erstrecken oder über diesen hinausragen. Ebenso ist es denkbar, auch zwischen dem zweiten Bauteil 114 und dem Kunststoffsockel 116 eine entsprechende Klebefolie vorzusehen.

Die Herstellung des Gasgenerators 110 erfolgt folgendermaßen: Zunächst werden das erste Bauteil 112 (das Gasgeneratorgehäuse) sowie das zweite Bauteil 114 (der Anzünder) bereitgestellt, und das erste Bauteil 112 wird im späteren Verbindungsbereich der Bauteile (der gerade dem Kontaktbereich 140 entspricht) mit der Klebefolie 142 versehen, indem ein oder mehrere entsprechend zugeschnittene Stücke der Klebefolie 142 an die entsprechende Stellen des ersten Bauteils 112, hier beidseitig im Bereich des Randes 122, mit der Klebstoffschicht 146 aufgeklebt werden.

Der Klebstoff der Klebstoffschicht 146 kann bereits jetzt durch den Anpreßdruck beim Aufkleben aktiviert bzw. ausgehärtet werden. Alternativ erfolgt das Aktivieren bzw. Aushärten durch Erwärmen, was z.B. während des Umspritzens durch die Wärmeeinwirkung durch den flüssigen Kunststoff geschieht.

Nachdem die Klebefolie 142 auf das erste Bauteil 112 aufgeklebt wurde, wird das zweite Bauteil 114 relativ zum ersten Bauteil 112 positioniert, und beide Bauteile 112, 114 werden gemeinsam unter Bildung des Kunststoffsockels 116 umspritzt, wobei beide Bauteile 112, 114 zumindest teilweise in den Kunststoffsockel 116 eingebettet werden.

Beim Umspritzen verbindet sich das Material der Kunststoffolie 144 mit dem eingespritzten Kunststoff, indem eine Oberflächenschicht der Kunststoffolie 144 in einer Verbindungszone 148 mit dem Kunststoffsockel 116 verschmilzt. Alternativ kann in der Verbindungszone 148 auch eine chemische Reaktion zwischen dem Material der Kunststoffolie 144 und dem des Kunststoffsockel 116 stattfinden, die die Kunststoffolie 144 und den Kunststoffsockel fest und unlösbar miteinander verbindet.

Die Klebstoffschicht 146 bildet eine Haftbrücke zwischen dem ersten Bauteil 112 und dem Kunststoffsockel 116, die elastisch und/oder plastisch verformbar ist, so daß Spannungen und Scherkräfte ausgeglichen werden, die aufgrund der unterschiedlichen thermischen Ausdehnungskoeffizienten der verschiedenen Materialien auftreten. Die Klebstoffschicht 146 wirkt dabei auch als Dichtung zwischen dem ersten Bauteil 112 und dem Kunststoffsockel 116.

## Patentansprüche

1. Gasgenerator (10), für eine Schutzeinrichtung in einem Fahrzeug mit einem Außengehäuse (12), mit einer zentralen Achse (A), und einem in einen Sockel (32) eingebetteten Anzünder (28), wobei das Außengehäuse (12) oder ein mit dem Außengehäuse (12) verbundenes Teil eine Einbuchtung (34) aufweist, in die sich der Sockel (32) erstreckt, und die die Einbuchtung (34) bildende Wand abschnittsweise nach innen gewölbt ist, **dadurch gekennzeichnet, dass** die Wand entfernt von der Mündung der Einbuchtung (34) eine nach außen verlaufende Ausbauchung (48) hat, die sich in radialer Richtung (r) erstreckt, wobei die Wand der Einbuchtung (34) im Bereich der Ausbauchung (48) eine S-förmige Kurve bildet und die Wandstärke der Wand der Einbuchtung (34) im Bereich der Ausbauchung (48) unverändert gegenüber der Wandstärke außerhalb der Ausbauchung (48) ist.

2. Gasgenerator (10) nach Anspruch 1, **dadurch gekennzeichnet, dass** die Einbuchtung (34) bildende Wand abschnittsweise in radialer Richtung (r) gewölbt ausgebildet ist, derart, dass eine oder mehrere Ausbauchungen (48), die sich in radialer Richtung von der Einbuchtung (34) weg erstrecken, gebildet sind.

3. Gasgenerator (10) nach Anspruch 2, **dadurch gekennzeichnet, dass** die Ausbauchung (48) in Umfangsrichtung nicht durchgängig ausgebildet ist und nur die eine oder die mehreren, separaten Ausbauchungen (48) entlang des Umfangs der Einbuchtung (34) vorgesehen sind.

4. Gasgenerator (10) nach Anspruch 1, **dadurch gekennzeichnet, dass** der Gasgenerator die zentrale Achse (A) aufweist, wobei, bezogen auf die zentrale Achse (A), eine Wölbung, die die Ausbauchung (48) bildet, ringförmig um die Einbuchtung (34) verläuft.

5. Gasgenerator (10), nach einem der Ansprüche 1 bis 4, **dadurch gekennzeichnet, dass** die die Einbuchtung (34) bildende Wand einen Bodenabschnitt (50) mit einer Öffnung (26) aufweist, durch die sich der Sockel (32) hindurch erstreckt, wobei der Bodenabschnitt (50) auf seinen entgegengesetzten Außenseiten in dem Bereich, in dem der Sockel (32) an ihm anliegt, zumindest einen Vorsprung (52) und/oder eine Vertiefung (54) aufweist.

6. Gasgenerator (10) nach einem der Ansprüche 1 bis 5, **dadurch gekennzeichnet, dass** der Sockel (32) durch zumindest abschnittsweises Umspritzen der die Einbuchtung (54) bildenden Wand gebildet ist und/ oder aus Kunststoff gebildet ist.

7. Gasgenerator (10) nach einem der Ansprüche 5 bis 6, **dadurch gekennzeichnet, dass** der Rand der Öffnung (26) auf einer Außenseite einen/den konvex geformten Vorsprung (52) aufweist, wobei der Vorsprung (52) durch einen umlaufenden Wulst gebildet ist.

8. Gasgenerator (10) nach einem der Ansprüche 5 bis 7, **dadurch gekennzeichnet, dass** der Bodenabschnitt (50) auf der dem Vorsprung (52) entgegengesetzten Außenseite im Bereich des Vorsprungs (52) eine/die ringförmig umlaufende Vertiefung (54) besitzt.

9. Gasgenerator (10) nach einem der Ansprüche 5 bis 8, **dadurch gekennzeichnet, dass** auf jeder der Außenseiten in dem Bereich, in dem der Sockel (32) an ihm anliegt, zumindest der eine Vorsprung (52) und/oder zumindest die eine Vertiefung (54) ausgebildet ist, wobei der zumindest eine Vorsprung (52) und/oder die zumindest eine Vertiefung (54) sich ringförmig um die Öffnung (26) erstrecken.

10. Gasgenerator (10) nach einem der Ansprüche 5 bis 9, **dadurch gekennzeichnet, dass** die in der dem Anzünder (28) zugewandten Außenseite ausgebildete Vertiefung (54) radial innerhalb einer auf der gegenüberliegenden Außenseite ausgebildeten Vertiefung angeordnet ist.

11. Modul mit einem Gasgenerator (10), einem von dem Gasgenerator (10) aufblasbarem Gassack (96) und einer Befestigungseinrichtung zur Anbringung des Moduls, insbesondere im Innenbereich eines Fahrzeuges, **dadurch gekennzeichnet, dass** der Gasgenerator (10) nach zumindest einem der Ansprüche 1 bis 10 ausgebildet oder hergestellt ist.

## Claims

1. A gas generator (10) for a protective device in a vehicle comprising an outer casing (12), comprising a central axis (A) and an igniter (28) embedded in a base (32), the outer casing (12) or a member connected to the outer casing (12) including an indentation (34) into which the base (32) extends and the wall forming the indentation (34) in portions being inwardly bulged, **characterized in that** distant from the mouth of the indentation (34) the wall has an outwardly extending bulge (48) which extends in the radial direction (r), wherein the wall of the indentation (34) forms an S-shaped curve in the area of the bulge (48) and the wall thickness of the wall of the indentation (34) in the area of the bulge (48) is unchanged as compared to the wall thickness outside the bulge (48).

2. The gas generator (10) according to claim 1, **characterized in that** the wall forming the indentation (34) in portions is formed to be bulged in the radial direction (r) such that one or plural bulges (48) extending away from the indentation (34) in the radial direction are formed.

3. The gas generator (10) according to claim 2, **characterized in that** the bulge (48) is not formed continuously in the peripheral direction and only the one or the plural separate bulges (48) are provided along the periphery of the indentation (34).

4. The gas generator (10) according to claim 1, **characterized in that** the gas generator includes the central axis (A), wherein, related to the central axis (A), a curvature forming the bulge (48) extends ring-shaped around the indentation (34).

5. The gas generator (10) according to any one of the claims 1 to 4, **characterized in that** the wall forming the indentation (34) includes a bottom portion (50) having an opening (26) through which the base (32) extends, wherein the bottom portion (50) includes at least one projection (52) and/or one recess (54) on its opposed outsides in the area in which the base (32) is adjacent to the same.

6. The gas generator (10) according to any one of the claims 1 to 5, **characterized in that** the base (32) is formed by injection-molding at least in portions around the wall forming the indentation (54) and/or is made from plastic.

7. The gas generator (10) according to any one of the claims 5 to 6, **characterized in that** the rim of the opening (26) on an outside includes a/the convexly shaped projection (52), wherein the projection (52) is formed by a peripheral bead.

8. The gas generator (10) according to any one of the claims 5 to 7, **characterized in that** the bottom portion (50) includes a/the recess (54) circumferential in ring shape on the outside opposed to the projection (52) in the area of the projection (52).

9. The gas generator (10) according to any one of the claims 5 to 8, **characterized in that** on each of the outsides in the area in which the base (32) is adjacent to the latter at least the one projection (52) and/or at least the one recess (54) is formed, wherein the at least one projection (52) and/or the at least one recess (54) extends in ring shape around the opening (26).

10. The gas generator (10) according to any one of the claims 5 to 9, **characterized in that** the recess (54) formed in the outside facing the igniter (28) is arranged radially inwardly of a recess formed on the opposite outside.

11. A module comprising a gas generator (10), an airbag (96) inflatable by said gas generator (10) and a mounting device for arranging the module, especially in the interior of a vehicle, **characterized in that** the gas generator (10) is designed or manufactured according to at least one of the claims 1 to 10.

## Revendications

1. Générateur de gaz (10) pour un dispositif de protection dans un véhicule, comprenant un boîtier extérieur (12) avec un axe central (A), et un initiateur (28) noyé dans un corps (32), pour lequel le boitier extérieur (12) ou une pièce reliée avec le boitier extérieur (12) présente un évidement (34), dans lequel le corps (32) s'étend, et la paroi formant l'évidement (34) est, vue en coupe, incurvée vers l'intérieur, **caractérisé en ce que** la paroi présente loin de l'ouverture de l'évidement (34) un renflement (48) s'étendant vers l'extérieur, qui s'étend dans la direction radiale (r), dans lequel la paroi de l'évidement (34) forme dans la zone de renflement (48) une courbe en forme de S et l'épaisseur de paroi de l'évidement (34) dans la zone du renflement (48) est inchangée par rapport à l'épaisseur de la paroi à l'extérieur du renflement (48).

2. Générateur de gaz (10) selon la revendication 1, **caractérisé en ce que** la paroi formant l'évidement est réalisée incurvée, vue en coupe, dans la direction radiale (r) d'une manière telle que sont présents un ou plusieurs renflements (48) s'étendant dans une direction radiale à l'évidement (34).

3. Générateur de gaz (10) selon la revendication 2, **caractérisé en ce que** le renflement (48) n'est pas conçu de manière continue sur la circonférence, et seul un ou plusieurs renflements séparés (48) sont prévus le long de la circonférence de l'évidement (34).

4. Générateur de gaz (10) selon la revendication 1, **caractérisé en ce que** le générateur de gaz présente un axe central (A), pour lequel, par rapport à l'axe central (A), une courbure, qui forme le renflement (48), est de forme annulaire autour de l'évidement (34).

5. Gasgenerator (10), nach einem der Ansprüche 1 bis 4, **dadurch gekennzeichnet, dass** die die Einbuchtung (34) bildende Wand einen Bodenabschnitt (50) mit einer Öffnung (26) aufweist, durch die sich der Sockel (32) hindurch erstreckt, wobei der Bodenabschnitt (50) auf seinen entgegengesetzten Außenseiten in dem Bereich, in dem der Sockel (32) an ihm anliegt, zumindest einen Vorsprung (52) und/oder eine Vertiefung (54) aufweist. Générateur de gaz (10) selon l'une des revendications 1 à 4, **caractérisé en ce que** la paroi formant l'évidement (34) présente une section inférieure (50) avec une ouverture (26) à travers laquelle s'étend le corps (32), pour lequel la partie inférieure (50) présente au moins une saillie (52) et/ou une rainure (54) sur ses côtés extérieurs opposés dans la région dans laquelle le corps (32) repose sur celle-ci.

6. Générateur de gaz (10) selon l'une des revendications 1 à 5, **caractérisé en ce que** le corps (32) est réalisé au moins par injection sur la paroi formant l'évidement (54) vue en coupe et/ou est formée en matière plastique.

7. Générateur de gaz (10) selon l'une des revendications 5 à 6, **caractérisé en ce que** le bord de l'ouverture (26) présente une saillie convexe (52) sur un côté extérieur, pour lequel la saillie (52) est formée par un bourrelet périphérique.

8. Générateur de gaz (10) selon l'une quelconque des revendications 5 à 7, **caractérisé en ce que** la section inférieure (50) présente une/la rainure circonférentielle annulaire (54) sur le côté extérieur opposé à la saillie (52) dans la zone de la saillie (52).

9. Générateur de gaz (10) selon l'une quelconque des revendications 5 à 8, **caractérisé en ce que** sur chacun des côtés extérieurs dans la région dans laquelle le corps (32) repose sur celle-ci, est formée au moins une saillie (52) et/ou au moins une rainure (54), pour lequel au moins une saillie (52) et/ ou au moins une rainure (54) s'étendent annulairement autour de l'ouverture (26).

10. Générateur de gaz (10) selon l'une quelconque des revendications 5 à 9, **caractérisé en ce que** la rainure (54) formée dans le côté extérieur tourné vers l'allumeur (28) est disposée radialement à l'intérieur d'une rainure formée sur le côté extérieur opposé.

11. Module avec un générateur de gaz (10) comprenant un sac gonflable (96) gonflé par le générateur de gaz (10) et un dispositif de fixation pour le montage du module, en particulier dans l'habitacle d'un véhicule, **caractérisé en ce que** le générateur de gaz (10) est réalisé ou fabriqué suivant l'une des revendications 1 à 10.
